(19) Europäisches Patentamt
European Patent Office
Office européen des brevets

(11) EP 1 141 057 B1

(12) EUROPÄISCHE PATENTSCHRIFT

(45) Veröffentlichungstag und Bekanntmachung des Hinweises auf die Patenterteilung:
**10.03.2004 Patentblatt 2004/11**

(21) Anmeldenummer: **99957987.3**

(22) Anmeldetag: **04.11.1999**

(51) Int Cl.[7]: **C08F 279/04**, C08F 279/02, C08F 291/02

(86) Internationale Anmeldenummer:
**PCT/EP1999/008413**

(87) Internationale Veröffentlichungsnummer:
**WO 2000/029458 (25.05.2000 Gazette 2000/21)**

(54) **ABS-FORMMASSEN MIT VERBESSERTER EIGENSCHAFTSKOMBINATION**

ABS-MOULDING COMPOUNDS WITH AN IMPROVED COMBINATION OF PROPERTIES

MATIERE MOULABLE ABS AUX ASSOCIATIONS DE PROPRIETES AMELIOREES

(84) Benannte Vertragsstaaten:
**DE ES FR GB IT NL**

(30) Priorität: **18.11.1998 DE 19853107**

(43) Veröffentlichungstag der Anmeldung:
**10.10.2001 Patentblatt 2001/41**

(73) Patentinhaber: **Bayer Aktiengesellschaft
51368 Leverkusen (DE)**

(72) Erfinder: **EICHENAUER, Herbert
D-41539 Dormagen (DE)**

(56) Entgegenhaltungen:
**EP-A- 0 418 042**
**EP-A- 0 678 531**
**US-A- 4 430 478**
**US-A- 4 713 420**
**US-A- 5 008 331**

- **DATABASE WPI Section Ch, Week 199346 Derwent Publications Ltd., London, GB; Class A12, AN 1993-365290 XP002133668 & JP 05 271360 A (MITSUI TOATSU CHEM INC), 19. Oktober 1993 (1993-10-19)**

EP 1 141 057 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

ABS-Formmassen werden schon seit vielen Jahren in großen Mengen als thermoplastische Harze für die Herstellung von Formteilen aller Art eingesetzt. Dabei kann das Eigenschaftsspektrum dieser Harze in weiten Bereichen variiert werden.

Von besonderem Interesse sind ABS-Polymerisate, die sich durch eine Kombination guter Werte für die Schlüsseleigenschaften, Zähigkeit (insbesondere bei tiefer Temperatur), Härte (d.h. E-Modul), Verarbeitbarkeit und Oberflächenglanz auszeichnen.

Bei Anwendung der Technologie der Emulsionspolymerisation werden derartige Produkte in der Regel durch kombinierten Einsatz verschiedener Pfropfkautschukkomponenten in einer thermoplastischen Harzmatrix hergestellt.

So beschreiben z.B. die DE-OS 24 20 357 und DE-OS 24 20 358 thermoplastische Formmassen vom ABS-Typ mit hoher Zähigkeit, hohem Oberflächenglanz und leichterer Verarbeitbarkeit durch Kombination eines grobteiligen Pfropfkautschuks mit einem feinteiligen Pfropfkautschuk, wobei die Gewichtsverhältnisse Styrol-Acrylnitril in den Pfropfkautschuken und im Matrixharz spezielle Werte aufweisen müssen.

EP-A 470 229, EP-A 473 400 und WO 91/13118 lehren die Herstellung stoßresistenter, hochglänzender thermoplastischer Harze durch Kombination eines Pfropfpolymeren mit geringem Kautschukgehalt und niedrigem Teilchendurchmesser mit einem Pfropfpolymeren mit hohem Kautschukgehalt und größerem Teilchendurchmesser.

In DE-OS 4113 326 werden thermoplastische Formmassen mit zwei unterschiedlichen Pfropfprodukten beschrieben, wobei die Kautschukgehalte der Pfropfkautschuke jeweils maximal 30 Gew.-% betragen.

Bei allen hier beschriebenen Formmassen sind mindestens zwei separat hergestellte Pfropfkautschukpolymere zur Erzielung der gewünschten Eigenschaften notwendig. Dies bedeutet, daß Optimierung der Pfropfreaktionsbedingungen, Pfropfpolymerisationsreaktionen, Aufarbeitung etc. für jeden Pfropfkautschuk separat durchgeführt werden müssen. Außerdem muß in der Regel mindestens eine der notwendigen Pfropfkautschukkomponenten einen niedrigen Kautschukgehalt aufweisen, d.h. es muß ein relativ hoher Anteil des aufwendig herzustellenden Pfropfkautschukpolymeren eingesetzt werden. Die notwendige Sicherheit bei der Einstellung der gewünschten Eigenschaftskombinationen ist trotzdem in vielen Fällen nicht gegeben.

Auch durch Verwendung von Mischungen zweier Kautschuklatices als Pfropfgrundlagen wurde versucht, Pfropfkautschuke zur Herstellung von verbesserten ABS-Pro-. dukten zu synthetisieren.

So beschreibt z.B. die EP-A 288 298 die Herstellung von Produkten mit einem feinteiligen und einem gröberteiligen Kautschuklatex als Pfropfgrundlagen, wobei jedoch nur Pfropfkautschuke mit niedrigen Kautschukgehalten um 40 % beschrieben werden. Die daraus hergestellten thermoplastischen Harze weisen nur unzureichende Verarbeitbarkeit aufgrund schlechter thermoplastischer Fließfähigkeiten auf; außerdem müssen Harzkomponenten mit hohen Acrylnitrilgehalten verwendet werden, was üblicherweise zu Verfärbungen der ABS-Produkte führt.

In EP-A 745 624 wird die Verwendung einer Mischung zweier Kautschuklatices mit definierten Breiten der Teilchengrößenverteilungen zur Herstellung von ABS-Formmassen ohne Farbvertiefungen bei Forrnteilen mit Rippenstrukturen beschrieben. Diese Produkte führen jedoch zu ungenügenden Tieftemperaturzähigkeiten und insbesondere zu einer schlechten Relation zwischen Zähigkeit und thermoplastischer Verarbeitbarkeit (Fließfähigkeit).

Es bestand daher die Aufgabe, thermoplastische Formmassen vom ABS-Typ bereitzustellen, die unter Verwendung nur eines einzigen Pfropfkautschukpolymeren hergestellt werden können, wobei die oben genannten Kombinationen aus hoher Zähigkeit, hoher Härte bzw. E-Modul, hohem Oberflächenglanz und insbesondere sehr guter thermoplastischer Verarbeitbarkeit sicher einstellbar sind. Außerdem sollte das verwendete Pfropfkautschukpolymer Kautschukgehalte über 50 Gew.-%, vorzugsweise über 55 Gew.-%, aufweisen.

Gegenstand der Erfindung sind ABS-Formmassen enthaltend

I) ein Pfropfkautschukpolymerisat, welches erhältlich ist durch Emulsionspolymerisation von Styrol und Acrylnitril im Gewichtsverhältnis 90: 10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart einer Mischung aus einem Butadienpolymerisatlatex (A) mit einem mittleren Teilchendurchmesser $d_{50} \leq 230$ nm, vorzugsweise 150 bis 220 nm, besonders bevorzugt 170 bis 215 nm und ganz besonders bevorzugt 175 bis 200 nm und einem Gelgehalt von 40 bis 95 Gew.-%, vorzugsweise 50 bis 90 Gew.-% und besonders bevorzugt 60 bis 85 Gew.-%, einem Butadienpolymerisatlatex (B) mit einem mittleren Teilchendurchmesser $d_{50}$ von 250 bis 330 nm, vorzugsweise von 260 bis 320 nm und besonders bevorzugt von 270 bis 310 nm und einem Gelgehalt von 35 bis 75 Gew.-%, vorzugsweise 40 bis 70 Gew.-% und besonders bevorzugt 45 bis 60 Gew.-% und einem Butadienpolymerisatlatex (C) mit einem mittleren Teilchendurchmesser $d_{50} \geq 350$ nm, vorzugsweise 370 bis 450 nm, besonders bevorzugt 375 bis 430 nm und ganz besonders bevorzugt 380 bis 425 nm und einem Gelgehalt von 60 bis 90 Gew.-%, vorzugsweise 65 bis 85 Gew.-% und besonders bevorzugt 70 bis 80 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 10:90 bis 60:40, vorzugsweise 20:80 bis 50:50

und besonders bevorzugt 25:75 bis 45:55 ist, und

II) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

Vorzugsweise werden die Butadienpolymerisatlatices (A), (B) und (C) bei der Herstellung des Pfropfkautschukpolymerisats (I) in Anteilen von 10 bis 40 Gew.-%, vorzugsweise 20 bis 37,5 Gew.-% und besonders bevorzugt 22,5 bis 35 Gew.-% (A), 10 bis 70 Gew.-%, vorzugsweise 20 bis 65 Gew.-% und besonders bevorzugt 30 bis 60 Gew.-% (B) und 5 bis 50 Gew.-%, vorzugsweise 7,5 bis 45 Gew.-% und besonders bevorzugt 10 bis 40 Gew.-% (C) eingesetzt werden (jeweils bezogen auf den jeweiligen Feststoffanteil der Latices).

Eine weitere bevorzugte Gruppe ist die Verwendung der Butadienpolymerisatlatices (A), (B) und (C) bei der Herstellung des Pfropfkautschukpolymerisats (I) in Anteilen von 10 bis 40 Gew.-%, vorzugsweise 20 bis 37,5 Gew.-% und besonders bevorzugt 22,5 bis 35 Gew.-% (A), 30 bis 70 Gew.-%, vorzugsweise 35 bis 65 Gew.-% und besonders bevorzugt 40 bis 60 Gew.-% (B) und 5 bis 45 Gew.-%, vorzugsweise 7,5 bis 40 Gew.-% und besonders bevorzugt 10 bis 35 Gew.-% (C) (jeweils bezogen auf den jeweiligen Feststoffanteil der Latices).

Insbesondere werden die Butadienpolymerisatlatices (A), (B) und (C) bevorzugt in solchen Mengen eingesetzt, daß für die Kautschukmengen die Gleichungen $B \leq A+C$, $B>A$ und $B>C$ erfüllt sind.

Im allgemeinen können die erfindungsgemäßen Formmassen 1 bis 60 Gew.-Teile, vorzugsweise 5 bis 50 Gew.-Teile (I) und 40 bis 99 Gew.-Teile, vorzugsweise 50 bis 95 Gew.-Teile (II) enthalten.

Außerdem können die erfindungsgemäßen Formmassen weitere kautschukfreie nicht aus Vinylmonomeren aufgebaute Thermoplastharze enthalten, wobei man diese Thermoplastharze in Mengen bis zu 500 Gew.-Teilen, vorzugsweise bis zu 400 Gew.-Teilen und besonders bevorzugt bis zu 300 Gew.-Teilen (jeweils bezogen auf 100 Gew. -Teile I + II) verwendet.

Die Butadienpolymerisatlatices (A), (B) und (C) können durch Emulsionspolymerisation von Butadien hergestellt werden. Dieses Polymerisationsverfahren ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-%, vorzugsweise bis zu 30 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol; vorzugsweise wird Butadien alleine eingesetzt. Es ist bei der Herstellung von (A), (B) und (C) auch möglich, nach bekannten Methoden zunächst ein feinteiliges Butadienpolymerisat herzustellen und es anschließend in bekannter Weise zur Einstellung der erforderlichen Teilchendurchmesser zu agglomerieren.

Einschlägige Techniken sind beschrieben (vergl. EP-PS 0 029 613; EP-PS 0 007 810; DD-PS 144 415 DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A), (B) und (C) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser $d_{50} \leq 230$ nm, vorzugsweise 150 bis 220 nm, besonders bevorzugt 170 bis 215 nm und ganz besonders bevorzugt 175 bis 200 nm, und einen Gelgehalt von 40 bis 95 Gew.-%, vorzugsweise 50 bis 90 Gew.-% und besonders bevorzugt 60 bis 85 Gew.-%.

Der Butadienpolymerisatlatex (B) besitzt einen mittleren Teilchendurchmesser $d_{50}$ von 250 nm bis 330 nm, vorzugsweise von 260 bis 320 nm und besonders bevorzugt von 270 bis 310 nm und einen Gelgehalt von 35 bis 75 Gew.-%, vorzugsweise 40 bis 70 Gew.-% und besonders bevorzugt 45 bis 60 Gew.-%.

Der Butadienpolymerisatlatex (C) besitzt einen mittleren Teilchendurchmesser $d_{50} \geq 350$ nm, vorzugsweise 370 bis 450 nm, besonders bevorzugt 375 bis 430 nm und ganz besonders bevorzugt 380 bis 425 nm und einen Gelgehalt von 60 bis 90 Gew.-%, vorzugsweise 65 bis 85 Gew.-% und besonders bevorzugt 70 bis 80 Gew.-%.

Die Bestimmung des mittleren Teilchendurchmesser $d_{50}$ kann durch Ultrazentrifugenmessung ermittelt werden (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A), (B) und (C) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vemetzend wirkender Substanzen zur Erzielung eines hohen Gelgehaltes oder z.B. niedrige Reaktionstemperatur und/ oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation bei der Herstellung des Pfropfpolymerisats I) kann so durchgeführt werden, daß das Monomerengemisch kontinuierlich zu dem Gemisch der Butadienpolymerisatlatices (A), (B) und (C) gegeben und polymerisiert wird.

Dabei werden bevorzugt spezielle Monomer/Kautschuk-Verhältnisse eingehalten und die Monomeren in einer bekannten Weise zum Kautschuklatex gegeben.

Zur Erzeugung der erfindungsgemäßen Komponente I) werden vorzugsweise 15 bis 50 Gew.-Teile, besonders bevorzugt 20 bis 40 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 50 bis 85 Gew.-Teilen, besonders bevorzugt 60 bis 80 Gew. -Teilen (jeweils bezogen auf Feststoff) des Butadienpolymerisatlatex-Gemisches aus (A), (B) und (C) polymerisiert.

Die bei der Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol und/oder Acrylnitril ganz oder teilweise durch copolymerisierbare Monomere, vorzugsweise durch $\alpha$-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres $\alpha$-Methylstyrol; Terpinolen.

Als Initiatoren kommen anorganische und organische Peroxide, z.B. $H_2O_2$, Di-tert.butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium-, oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist 25°C bis 160°C, vorzugsweise 40°C bis 90°C. Geeignete Emulgatoren sind oben angegeben.

Zur Erzeugung der erfindungsgemäßen Komponente I) kann die Pfropfpolymerisation vorzugsweise durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate II) werden vorzugsweise Copolymerisate des Styrols und Acrylnitrils im Gewichtsverhältnis 90:10 bis 50:50 verwendet, wobei Styrol und/oder Acrylnitril ganz oder teilweise durch $\alpha$-Methylstyrol, Methylmethacrylat oder N-Phenylmaleinimid ersetzt werden kann.

Besonders bevorzugt sind Copolymerisate II) mit Anteilen an eingebauten Acrylnitril-Einheiten <30 Gew.-%.

Diese Copolymerisate besitzen vorzugsweise mittlere Molekulargewichte $\overline{M}_w$ von 20 000 bis 200 000 bzw. Grenzviskositäten [$\eta$] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z. B. herstellbar durch Umsetzung von Diphenolen der Formeln (I) und (II)

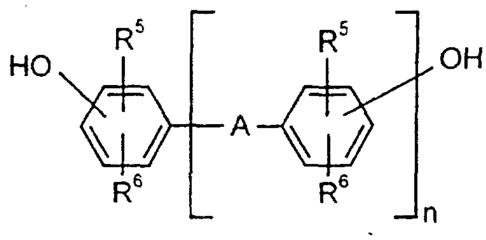

(I)

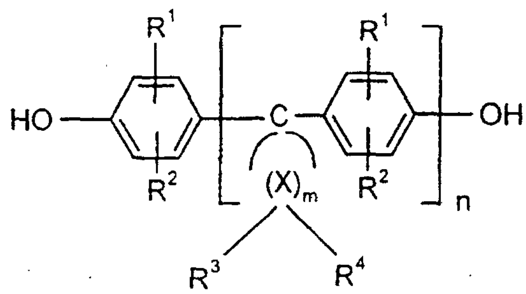

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, $-SO_2-$ oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechem eingestellt werden kann.

Geeignete Diphenole der Formeln (I) und (II) sind z.B. Hydrochinon; Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskompönenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von

Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte erfindungsgemäße Formmassen enthalten 1 bis 60 Gew.-Teile, vorzugsweise 5 bis 50 Gew.-Teile Pfropfpolymerkomponente I) und 40 bis 99 Gew.-Teile, vorzugsweise 50 bis 95 Gew.-Teile kautschukfreies Copolymerisat II).

Falls zusätzlich weitere kautschukfreie nicht aus Vinylmonomeren aufgebaute Thermoplastharze verwendet werden, beträgt deren Menge bis zu 500 Gew.-Teile, vorzugsweise bis zu 400 Gew.-Teile und besonders bevorzugt bis zu 300 Gew.-Teile (jeweils bezogen auf 100 Gew.-Teile I) + II)).

Die Herstellung der erfindungsgemäßen Formmassen erfolgt durch Vermischen der Komponenten I) und II) auf üblichen Mischaggregaten (vorzugsweise auf Mehrwalzenstühlen, Mischextrudern oder Innenknetern).

Gegenstand der Erfindung ist daher weiterhin ein Verfahren zur Herstellung der erfindungsgemäßen Formmassen, wobei man die Komponenten I) und II) vermischt und bei erhöhter Temperatur, im allgemeinen bei Temperaturen von 150°C bis 300°C, compoundiert und extrudiert.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

**Beispiele**

Komponenten

ABS-Pfropfpolymerisat 1 (erfindungsgemäß)

15 Gew.-Teile (gerechnet als Feststoff) eines durch radikalische Polymerisation hergestellten anionisch emulgierten Polybutadienlatex mit einem $d_{50}$-Wert von 183 nm und einem Gelgehalt von 79 Gew.-%, 30 Gew.-Teile (gerechnet als Feststoff) eines durch radikalische Polymerisation hergestellten anionisch emulgierten Polybutadienlatex mit einem $d_{50}$-Wert von 305 nm und einem Gelgehalt von 55 Gew.-% und 15 Gew.-Teile (gerechnet als Feststoff) eines durch radikalische Polymerisation hergestellten anionisch emulgierten Polybutadienlatex mit einem $d_{50}$-Wert von

423nm und einem Gelgehalt von 78 Gew.-% werden mit Wasser auf einem Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 40 Gew.-Teile eines Gemisches aus 73 Gew.-% Styrol und 27 Gew.-% Acrylnitril und 0,12 Gew.-Teile tert. -Dodecylmercaptan innerhalb 4 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland gelöst in alkalisch eingestelltem Wasser) über einen Zeitraum von 4 Stunden zudosiert. Nach einer vierstündigen Nachreaktionszeit wird der Pfropflatex nach Zugabe von ca. 1,0 Gew.-Teilen eines phenolischen Antioxidans mit einem Magnesiumsulfat/-Essigsäure-Gemisch koaguliert und nach dem Waschen mit Wasser das resultierende Pulver bei 70°C im Vakuum getrocknet.

ABS-Pfropfpolymerisat 2 (erfindungsgemäß)

17,5 Gew.-Teile (gerechnet als Feststof) eines durch radikalische Polymerisation hergestellten anionisch emulgierten Polybutadienlatex und einem $d_{50}$-Wert von 183 nm und einem Gelgehalt von 79 Gew.-%, 35 Gew.-Teile (gerechnet als Feststoff) eines durch radikalische Polymerisation hergestellten anionisch emulgierten Polybutadienlatex und einem $d_{50}$-Wert von 305 nm und einem Gelgehalt von 55 Gew.-% und 17,5 Gew.-Teile (gerechnet als Feststoff) eines durch radikalische Polymerisation hergestellten anionisch emulgierten Polybutadienlatex mit einem $d_{50}$-Wert von 423 nm und einem Gelgehalt von 78 Gew.-% weiden mit Wasser auf einen Feststoffgehalt von ca. 20 Gew.-% gebracht, wonach auf 63°C erwärmt und mit 0,4 Gew.-Teilen Kaliumperoxodisulfat (gelöst in Wasser) versetzt wird. Danach werden 30 Gew.-Teile eines Gemisches aus 73 Gew.-% Styrol und 27 Gew.-% Acrylnitril und 0,1 Gew.-Teile tert.-Dodecylmercaptan innerhalb 4 Stunden gleichmäßig zudosiert. die weitere Herstellung erfolgt wie bei ABS-Pfropfpolymerisat 1 beschrieben.

ABS-Pfropfpolymerisat 3 (erfindungsgemäß)

17,5 Gew.-Teile (gerechnet als Feststoff) eines durch radikalische Polymerisation hergestellten anionisch emulgierten Styrol/Butadien = 10:90-Copolymeren mit einem $d_{50}$-Wert von 182 nm und einem Gelgehalt von 71 Gew.-%, 30 Gew.-Teile (gerechnet als Feststoff) eines durch radikalische Polymerisation hergestellten anionisch emulgierten Polybutadienlatex mit einem $d_{50}$-Wert von 288 nm und einem Gelgehalt von 51 Gew.-% und 12,5 Gew.-Teile (gerechnet als Feststoff) eines durch radikalische Polymerisation hergestellten anionisch emulgierten Polybutadienlatex mit einem $d_{50}$-Wert von 410 nm und einem Gelgehalt von 75 Gew.-% werden mit Wasser auf einem Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 40 Gew.-Teile eines Gemisches aus 73 Gew.-% Styrol und 27 Gew.-% Acrylnitril und 0,12 Gew. -Teile tert.-Dodecylmercaptan innerhalb 4 Stunden gleichmäßig zudosiert. Die weitere Herstellung erfolgt wie bei ABS-Pfropfpolymerisat 1 beschrieben.

ABS-Pfropfpolymerisat 4 (Vergleichsmaterial, nicht erfindungsgemäß)

Die unter "ABS-Pfropfpolymerisat 1" beschriebene Vorschrift wurde wiederholt, wobei anstelle des Polybutadienlatexgemisches 60 Gew.-Teile (gerechnet als Feststoff) des Polybutadienlatex mit einem $d_{50}$-Wert von 423 nm und einem Gelgehalt von 78 Gew.-% eingesetzt wurden.

ABS-Pfropfpolymerisat 5 (Vergleichsmaterial, nicht erfindungsgemäß)

Die unter "ABS-Pfropfpolymerisat 1" beschriebene Vorschrift wurde wiederholt, wobei anstelle des Polybutadienlatexgemisches 60 Gew.-Teile (gerechnet als Feststoff) eines Polybutadienlatex mit einem $d_{50}$-Wert von 131 nm und einem Gelgehalt von 88 Gew.-% eingesetzt wurden.

Harzkomponente 1

Statistisches Styrol/Acrylnitril-Copolymerisat (Styrol:Acrylnitril-Gewichtsverhältnis 72:28) mit einem $\overline{M}_w$ von ca. 85.000 und $\overline{M}_w/\overline{M}_n-1 \leq 2$ erhalten durch radikalische Lösungspolymerisation.

Harzkomponente 2

Statistisches Styrol/Acrylnitril-Copolymerisat (Styrol:Acrylnitril-Gewichtsverhältnis 72:28) mit einem $\overline{M}_w$ von ca. 115.000 und $\overline{M}_w/\overline{M}_n-1 \leq 2$ erhalten durch radikalische Lösungspolymerisation.

Formmassen

Die oben beschriebenen Polymerkomponenten werden in den in Tabelle 1 angegebenen Anteilen, 2 Gew. -Teilen Ethylendiaminbisstearylamid und 0,1 Gew.-Teilen eines Silikonöls in einem Innenkneter vermischt und nach Granulierung zu Prüfstäben und zu einer ebenen Platte (zur Beurteilung der Oberfläche) verarbeitet.

Folgende Daten werden ermittelt:

Kerbschlagzähigkeit bei Raumtemperatur ($a_k^{RT}$) und bei -40°C ($a_k^{-40°C}$) nach ISO 180/1A (Einheit: kJ/$m^2$), Kugeldruckhärte ($H_C$) nach DIN 53456 (Einheit: N/$mm^2$),
thermoplastische Fließfähigkeit (MVI) nach DIN 53735U (Einheit: $cm^3$/10 min) und Oberflächenglanz nach DIN 67530 bei einem Reflektionswinkel von 20° (Reflektometerwert).

Aus den Beispielen (Prüfdaten siehe Tabelle 2) ist ersichtlich, daß sich die erfindungsgemäßen Formmassen durch eine einzigartige Kombination sehr hoher Zähigkeiten (bei Raumtemperatur und tiefer Temperatur), sehr hoher Kugeldruckhärten, sehr leichter Verarbeitbarkeiten und sehr guter Glanzwerte auszeichnen. Dabei ist die Variabilität der ABS-Eigenschaften unter Verwendung eines einzigen Pfropfpolymeren äußerst hoch (siehe z.B. nahezu Verdoppelung der Zähigkeitswerte durch Anhebung des Kautschukgehaltes von 15 Gew.-% auf 22 Gew.-% unter Beibehaltung der Harzmatrix).

Tabelle 1: Zusammensetzungen der Formmassen

| Beispiel | ABS-Pfropf-polymer 1 (Gew.-Teile) | ABS-Pfropf-polymer 2 (Gew.-Teile) | ABS-Pfropf-polymer 3 (Gew.-Teile) | ABS-Pfropf-polymer 4 (Gew.-Teile) | ABS-Pfropf-polymer 5 (Gew.-Teile) | Harzkom-ponente 1 (Gew.-Teile) | Harzkom-ponente 2 (Gew.-Teile) |
|---|---|---|---|---|---|---|---|
| 1 | 25 | - | - | - | - | 75 | - |
| 2 | 30 | - | - | - | - | 70 | - |
| 3 | 36,7 | - | - | - | - | 63,3 | - |
| 4 | - | 21,43 | - | - | - | 78,57 | - |
| 5 | - | 25,72 | - | - | - | 74,28 | - |
| 6 | - | 31,43 | - | - | - | 68,57 | - |
| 7 | - | - | 30 | - | - | 70 | - |
| 8 | 36,7 | - | - | - | - | - | 63,3 |
| 9 | - | 31,43 | - | - | - | - | 68,57 |
| 10 | - | - | 36,7 | - | - | - | 63,3 |
| 11 (Vergleich) | - | - | - | 12,5 | 12,5 | 75 | - |
| 12 (Vergleich) | - | - | - | 15 | 15 | 70 | - |
| 13 (Vergleich) | - | - | - | 18,35 | 18,35 | 63,3 | - |
| 14 (Vergleich) | - | - | - | 36,7 | - | - | 63,3 |

Tabelle 2:

| Prüfdaten der Formmassen | | | | | |
|---|---|---|---|---|---|
| Beispiel | RT $a_k$ (kJ/m$^2$) | -40°C $a_k$ (kJ/m$^2$) | $H_c$ (N/mm$^2$) | MVI (cm$^3$/10 min) | Glanzgrad |
| 1 | 18,3 | 9,0 | 118 | 40,6 | 94 |
| 2 | 24,4 | 12,1 | 108 | 32,4 | 93 |
| 3 | 32,5 | 23,4 | 95 | 27,2 | 91 |
| 4 | 17,3 | 9,2 | 116 | 40,7 | 95 |
| 5 | 24,2 | 12,2 | 105 | 34,4 | 94 |
| 6 | 29,7 | 23,0 | 93 | 28,6 | 93 |
| 7 | 24,5 | 11,9 | 109 | 35,3 | 93 |
| 8 | 36,5 | 24,7 | 90 | 8,7 | 92 |
| 9 | 36,2 | 26,1 | 89 | 8,4 | 92 |
| 10 | 36,6 | 23,5 | 91 | 8,9 | 91 |
| 11 (Vergleich) | 17,2 | 8,8 | 113 | 36,5 | 94 |
| 12 (Vergleich) | 22,8 | 9,1 | 102 | 31,1 | 92 |
| 13 (Vergleich) | 27,3 | 14,6 | 91 | 23,4 | 91 |
| 14 (Vergleich) | 33,1 | 19,7 | 85 | 8,2 | 92 |

**Patentansprüche**

**1.** ABS-Formmassen enthaltend

I) ein Pfropfkautschukpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem mittleren Teilchendurchmesser $d_{50} \leq 230$ nm und einem Gelgehalt von 40 bis 95 Gew.-%, einem Butadienpolymerisatlatex (B) mit einem mittleren Teilchendurchmesser $d_{50}$ von 250 bis 330 nm und einem Gelgehalt von 35 bis 75 Gew.-% und einem Butadienpolymerisatlatex (C) mit einem mittleren Teilchendurchmesser $d_{50} \geq 350$ nm und einem Gelgehalt von 60 bis 90 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 10:90 bis 60:40 ist, und

II) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Mcthylmethacrylat oder N-Phenylmaleinimid ersetzt werden kann.

**2.** ABS-Formmassen enthaltend

I) ein Pfropfkautschukpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart einer Mischung aus einem Butadienpolymerisatlatex (A) mit einem mittleren Teilchendurchmesser von 150 bis 220 nm und einem Gelgehalt von 50 bis 90 Gew.-%, einem Butadienpolymerisatlatex (B) mit einem mittleren Teilchendurchmesser $d_{50}$ von 260 bis 320 nm und einem Gelgehalt von 40 bis 70 Gew.-% und einem Butadienpolymerisatlatex (C) mit einem mittleren Teilchendurchmesser $d_{50}$ von 370 bis 450 nm und einem Gelgehalt von 65 bis 85 Gew.-%, wobei die Butadienpolymerisatlatices jeweils 0 bis 50 Gew.-% eines weiteren Vinylmonomeren copolymerisiert enthalten und wobei das Massenverhältnis von eingesetzten Pfropfmonomeren zu eingesetzten Butadienpolymerisaten 20:80 bis 50:50 ist, und

II) mindestens ein kautschukfreies Copolymerisat aus Styrol und Acrylnitril im Gewichtsverhältnis 90:10 bis 50:50, wobei Styrol und/oder Acrylnitril ganz oder teilweise durch α-Methylstyrol, Methylmethacrylat oder N-Phenylmaleinimid ersetzt werden kann.

**3.** ABS-Formmassen gemäß Anspruch 1, wobei der Butadienpolymerisatlatex A) in einer Menge von 10 bis 40 Gew.-%, B) in einer Menge von 10 bis 70 Gew.-% und C) in einer Menge von 5 bis 50 Gew.-% eingesetzt wird (jeweils bezogen auf den jeweiligen Feststoffanteil der Latices).

**4.** ABS-Formmassen gemäß Anspruch 1 bis 3, wobei das Butadienpolymerisat bis zu 50 Gew.-% (bezogen auf die gesamte zur Butadienpolymerisatherstellung eingesetzte Monomermenge) neben Butadien Comonomere ausgewählt aus der Gruppe Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol oder Mischungen hieraus , enthält.

**5.** Thermoplastische Formmassen nach Ansprüchen 1 bis 4 enthaltend zusätzlich mindestens ein Harz ausgewählt aus aromatischem Polycarbonat, aromatischem Polyestercarbonat, Polyester, Polyamid oder Mischungen daraus.

**6.** Verfahren zur Herstellung von Formmassen gemäß Ansprüchen 1 bis 5, wobei man die Komponenten I) und II) vermischt und bei erhöhter Temperatur compoundiert und extrudiert.

**7.** Verwendung der thermoplastischen Formmassen nach Ansprüchen 1 bis 6 zur Herstellung von Formteilen.

**8.** Formteile, erhältlich aus Formmassen gemäß Ansprüchen 1 bis 6.

## Claims

**1.** ABS moulding compositions containing

I) a graft rubber polymer which is obtainable by emulsion polymerisation of styrene and acrylonitrile in the ratio by weight of 90:10 to 50:50, wherein styrene and/or acrylonitrile may be entirely or partly replaced by α-methylstyrene, methyl methacrylate or N-phenylmaleic imide, in the presence of a mixture of a butadiene polymer latex (A) with an average particle diameter $d_{50} \leq 230$ nm and a gel content of 40 to 95 wt.%, a butadiene polymer latex (B) with an average particle diameter $d_{50}$ of 250 to 330 nm and a gel content of 35 to 75 wt.% and a butadiene polymer latex (C) with an average particle diameter $d_{50} \geq 350$ nm and a gel content of 60 to 90 wt.%, wherein the butadiene polymer latices each contain 0 to 50 wt.% of another copolymerised vinyl monomer and wherein the ratio by weight of the graft monomers used to the butadiene polymers used is 10:90 to 60:40, and

II) at least one rubber-free copolymer of styrene and acrylonitrile in the ratio by weight of 90:10 to 50:50, wherein styrene and/or acrylonitrile may be entirely or partly replaced by α-methylstyrene, methyl methacrylate or N-phenylmaleic imide.

**2.** ABS moulding compositions containing

I) a graft rubber polymer which is obtainable by emulsion polymerisation of styrene and acrylonitrile in the ratio by weight of 90:10 to 50:50, wherein styrene and/or acrylonitrile may be entirely or partly replaced by α-methylstyrene, methyl methacrylate or N-phenylmaleic imide, in the presence of a mixture of a butadiene polymer latex (A) with an average particle diameter of 150 to 220 nm and a gel content of 50 to 90 wt.%, a butadiene polymer latex (B) with an average particle diameter $d_{50}$ of 260 to 320 nm and a gel content of 40 to 70 wt.% and a butadiene polymer latex (C) with an average particle diameter dso of 370 to 450 nm and a gel content of 65 to 85 wt.%, wherein the butadiene polymer latices each contain 0 to 50 wt.% of another copolymerised vinyl monomer and wherein the ratio by weight of the graft monomers used to the butadiene polymers used is 20:80 to 50:50, and

II) at least one rubber-free copolymer of styrene and acrylonitrile in the ratio by weight of 90:10 to 50:50, wherein styrene and/or acrylonitrile may be entirely or partly replaced by α-methylstyrene, methyl methacrylate or N-phenylmaleic imide.

**3.** ABS moulding compositions according to claim 1, wherein butadiene polymer latex A) is used in an amount of 10 to 40 wt.%, B) is used in an amount of 10 to 70 wt.% and C) is used in an amount of 5 to 50 wt.% (each with respect to the particular solids content of the latices).

**4.** ABS moulding compositions according to claims 1 to 3, wherein the butadiene polymer contains up to 50 wt.% (with respect to the entire amount of monomers used to prepare the butadiene polymer) of comonomers, apart from butadiene, chosen from the group isoprene, chloroprene, acrylonitrile, styrene, α-methylstyrene, $C_1$-$C_4$-alkylstyrenes, $C_1$-$C_8$-alkylacrylates, $C_1$-$C_8$-alkylmethacrylates, alkyleneglycol diacrylates, alkyleneglycol dimethacrylates, divinylbenzene or mixtures thereof.

**5.** Thermoplastic moulding compositions according to claims 1 to 4 also containing at least one resin selected from an aromatic polycarbonate, an aromatic polyestercarbonate, a polyester, a polyamide or mixtures thereof.

**6.** A process for preparing moulding compositions according to claims 1 to 5, wherein components I) and II) are mixed and then compounded and extruded at elevated temperature.

**7.** Use of the thermoplastic moulding compositions according to claims 1 to 6 to produce moulded articles.

**8.** Moulded articles obtainable from moulding compositions according to claims 1 to 6.

**Revendications**

**1.** Matières à mouler ABS contenant

I) un caoutchouc greffé polymère obtenu par polymérisation en émulsion du styrène et de l'acrylonitrile à des proportions relatives en poids de 90:10 à 50:50, le styrène et/ou l'acrylonitrile pouvant être remplacés en totalité ou en partie par l'α-méthylstyrène, le méthacrylate de méthyle ou le N-phénylmaléimide, en présence d'un mélange d'un latex de polymère du butadiène (A) à un diamètre de particule moyen $d_{50} \leq 230$ nm et une teneur en gel de 40 à 95 % en poids, d'un latex de polymère du butadiène (B) au diamètre de particule moyen $d_{50}$ de 250 à 330 nm, à une teneur en gel de 35 à 75 % en poids, et d'un latex de polymère du butadiène (C) à un diamètre de particule moyen $d_{50} \geq 350$ nm et une teneur en gel de 60 à 90 % en poids, les latex de polymères du butadiène contenant chacun 0 à 50 % en poids, à l'état copolymérisé, d'un autre monomère vinylique, et les proportions relatives en poids entre les monomères soumis au greffage et les polymères du butadiène mis en oeuvre allant de 10:90 à 60:40, et
II) au moins un copolymère, exempt de caoutchouc, du styrène et de l'acrylonitrile à des proportions relatives en poids de 90:10 à 50:50, le styrène et/ou l'acrylonitrile pouvant être remplacés en totalité ou en partie par l'α-méthylstyrène, le méthacrylate de méthyle ou le N-phénylmaléimide.

**2.** Matières à mouler ABS contenant

I) un caoutchouc greffé polymère obtenu par polymérisation en émulsion du styrène et de l'acrylonitrile à des proportions relatives en poids de 90:10 à 50:50, le styrène et/ou l'acrylonitrile pouvant être remplacés en totalité ou en partie par l'α-méthylstyrène, le méthacrylate de méthyle ou le N-phénylmaléimide, en présence d'un mélange d'un latex de polymère du butadiène (A) à un diamètre de particule moyen de 150 à 220 nm et une teneur en gel de 50 à 90 % en poids, d'un latex de polymère du butadiène (B) à un diamètre de particule moyen $d_{50}$ de 260 à 320 nm et une teneur en gel de 40 à 70 % en poids et d'un latex de polymère du butadiène (C) à un diamètre de particule moyen $d_{50}$ de 370 à 450 nm et une teneur en gel de 65 à 85 % en poids, les latex de polymères du butadiène contenant chacun à l'état copolymérisé 0 à 50 % en poids d'un autre monomère vinylique, et les proportions relatives en poids entre les monomères soumis au greffage et les polymères du butadiène mis en oeuvre allant de 20:80 à 50:50, et
II) au moins un copolymère, exempt de caoutchouc, du styrène et de l'acrylonitrile à des proportions relatives en poids de 90:10 à 50:50, le styrène et/ou l'acrylonitrile pouvant être remplacés en totalité ou en partie par l'α-méthylstyrène, le méthacrylate de méthyle ou le N-phénylmaléimide.

**3.** Matières à mouler ABS selon la revendication 1, pour lesquelles on utilise le latex de polymère du butadiène (A) en quantité de 10 à 40 % en poids, le latex de polymère du butadiène (B) en quantité de 10 à 70 % en poids et le latex de polymère du butadiène (C) en quantité de 5 à 50 % en poids (ces quantités se rapportant dans tous les

cas aux matières solides des latex).

**4.** Matières à mouler ABS selon les revendications 1 à 3, pour lesquelles le polymère du butadiène peut contenir, en plus du butadiène, jusqu'à 50 % en poids (par rapport à la quantité totale des monomères mis en oeuvre à la préparation du polymère du butadiène) de comonomères choisis dans le groupe consistant en l'isoprène, le chloroprène, l'acrylonitrile, le styrène, l'$\alpha$-méthylstyrène, les (alkyle en $C_1$ à $C_4$)styrènes, les acrylates d'alkyle en $C_1$ à $C_8$, les méthacrylates d'alkyle en $C_1$ à $C_8$, les diacrylates d'alkylèneglycols, les diméthacrylates d'alkylèneglycols, le divinylbenzène ou leurs mélanges.

**5.** Matières à mouler thermoplastiques selon les revendications 1 à 4 contenant en outre au moins une résine choisie parmi les polycarbonates aromatiques, les polyester-carbonates aromatiques, les polyesters, les polyamides et leurs mélanges.

**6.** Procédé pour la préparation des matières à mouler selon les revendications 1 à 5 selon lequel on mélange les composants I) et II) et on les homogénéise à haute température et on les extrude.

**7.** Utilisation des matières à mouler thermoplastiques selon les revendications 1 à 6 pour la fabrication de pièces moulées.

**8.** Pièces moulées obtenues à partir des matières à mouler selon les revendications 1 à 6.